# EUROPEAN PATENT APPLICATION

(11) **EP 1 850 240 A1**
(43) Date of publication of application: **31.10.2007**
(21) Application number: 06705592.1
(22) Date of filing: 26.01.2006
(51) Int. Cl.: G06F 15/00

(54) **A METHOD FOR ESTABLISHING THE PATH BASED ON THE CHANGE OF THE NODE ADDRESS**

(30) Priority: 06.02.2005 CN 200510007335
(71) Applicant: Huawei Technologies Co., Ltd., Longgang District, Shenzhen Guangdong 518129 (CN)
(72) Inventor: LI, Wang Huawei Administration Building, Shenzhen Guangdong 518129 (CN); YANG, Yu Huawei Administration Building, Shenzhen Guangdong 518129 (CN)
(74) Representative: Pfenning, Meinig & Partner GbR
(86) International application number: PCT/CN2006/000171
(87) International publication number: WO 2006/081768

(57) **Abstract**

A method for establishing the path based on the change of the node address includes the steps of: a, changing the current active address of the node; b, setting the new address link transmission path; c, adding the first identifier which identifies that the new address link transmission path is the changed address transmission path and the second identifier which identifies the original address link transmission path which the new address link transmission path will replace to the new address link transmission path ;d, when the node judging that the new address link transmission path which passes through the node has the first identifier, it finds the cross connection corresponding to the original address link transmission path based on the second identifier attached to the address link transmission path, and mapping the cross connection to the new address link transmission path to complete the establish of the new address link transmission path. This invention avoids the switch loss of the service signal when switching between the original address link transmission path and the new address link transmission path.

## Description

### Field of the Invention

The present invention relates to ASON (Automatically Switched Optical Network) technologies, in particular, to a method for establishing a path based on node address change.

### Background of the Invention

Optical network system for transmission mainly includes SDH (Synchronous Digital Hierarchy)/Sonet (Synchronous Optical Network) and wavelength network, etc. Conventional optical network is a network system based on centralized management, and permanent connection is employed between nodes in the network for information intercommunicating. In a conventional optical network system, the permanent connection is realized by manually configuring service switching relationships on all of the nodes. Once such a configuration is determined, it usually will not be modified any more in large-scale optical network system.

The connection path of permanent connection is pre-computed by the management plane according to the service switching requirements between the nodes and the utilization of network resources; then, a cross-link command is sent to each node via a network management interface along the computed connection path, and uniform assignation is performed, so that a connection path may be established finally. Due to advantages such as simple design, low input cost and so on, permanent connection gains good application effect in the initial development stage of optical network. However, since the establishment, maintenance and removal of the permanent connection require manual work or intervention of network management system, the operation process is very troublesome. As the data traffic of the network system increases continuously, such a connection mode may no longer meet the requirements of better dynamic flexibility for the optical network system.

To solve the problem that permanent connection cannot meet the various requirements for the optical network when data traffic increases continuously, ITU-T (ITU-Telecommunication Standardization Sector) provides an ASON (Automatically Switched Optical Network) architecture. In ASON, two new connection modes are introduced: soft permanent connection and switched connection. Wherein, the soft permanent connection mode is to establish a connection path on the control plane, which is initiated by the management plane; and the switched connection mode is to establish a connection path on the control plane, which is initiated by user equipment.

Wherein, the main characteristic of the ASON architecture lies in that a control plane (control plane is a controlling communication network based on IP Technology , on which routing protocols, signaling protocols and so on may be operated for automatically controlling various services) is added to the conventional optical network, and a concept of switched connection is proposed. Thus, a node in ASON first obtains the connection relationship with other nodes via link-local discovery technology, then issues its node and link state via the control plane, and receives the state information issued by other nodes in the network. In this way, each node in the network may obtain a "network map" which describes the accurate topology information of the whole network. The "network map" includes various information such as nodes, links, resource and so on. When a user equipment or the management plane requires a node to establish a connection path, the corresponding node obtains a feasible path by using the obtained "network map" information and according to a certain routing algorithm [usually, CSPF (Constrained shortest Path First)], and then each node on the path is driven to establish a cross-link relationship via a signaling protocol [usually, RSVP-TE (Resource Reservation Protocol-Traffic Engineering) is selected], so that a connection path is established. When a network connection is dynamically established, released or when link resources change due to failure, the corresponding node issues the changed information such as node state, link state, and so on in time, so that the "network map" among the nodes may be re-synchronized.

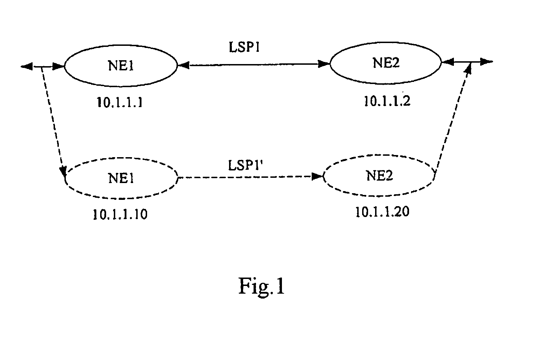

Wherein, it is specified in ITU-T G.8080 that each node in an ASON may be identified by a plurality of address IDs, in other words, each node in the ASON may have a plurality of address IDs, wherein the address used by the node currently is taken as the activation address. After each node for transmitting service signals changes the current activation address respectively, the node needs to switch the service signals transmitted on the original address chain transmission path to the updated address chain transmission path for transmission. As shown in Figure 1, which is a schematic diagram showing a process for switching a service signal from the original address chain transmission path to the updated address chain transmission path in the prior art. In this figure, when current activation address of node NE1 is 10.1.1.1 and current activation address of node NE2 is 10.1.1.2, the service signal is transmitted on address chain transmission path 10.1.1.1-10.1.1.2 (i.e.,Label Switched Path (LSP) 1 formed by the connection between NE1 with the current activation address of 10.1.1.1 and NE2 with the current activation address of 10.1.1.2). After NE1 changes the current activation address 10.1.1.1 to 10.1.1.10 and NE2 changes the current activation address 10.1.1.21 to 10.1.1.20, it is required to switch the service signal from the original address chain transmission path 10.1.1.1-10.1.1.2 to the updated address chain transmission path 10.1.1.10-10.1.1.20 (i.e., LSP1' formed by the connection between NE1 with the current activation address of 10.1.1.10 and NE2 with the current activation address of 10.1.1.20) for transmission. Thus, processes, such as configuring, state refreshing and restoring and so on, may be performed to the updated address chain transmission path directly.

Wherein, the node address in the ASON is often changed during the process of integrating and partitioning each existing control domain in ASON. Wherein, control domain integration refers to that nodes originally belonging to different control domains are integrated in one control domain by changing node addresses, so that each node address in the control domain is unique in the control domain; while control domain partition is opposite to control domain integration, that is, nodes originally belonging to the same control domain are partitioned to different control domains by changing the node addresses, and different nodes partitioned to different control domains may have the same address, i.e., node address in the partitioned different control domains may be repeated to manage the different control domain.

Thus it can be seen that during the integration and partition process of control domain in an ASON, since the current activation addresses of nodes in the network may change correspondingly, it is required to switch the service signals transmitted on the original address chain transmission path to the updated address chain transmission path for transmission. If the switching process is too long, it is difficult to be accepted by operators who are sensitive to the provision of services. Thus, it is required to ensure that the switching process for switching a service signal from the original address chain transmission path to the updated address chain transmission path is as smooth and rapid as possible, and the damage to the service signal during the switching process should be as small as possible.

At present, the methods for establishing a path based on node address change mainly include rerouting and service optimization. The processes of these two methods are as follows.

First of all, a new transmission path is established. The newly established transmission path should be kept separated as far as possible from the original address chain transmission path on which the node address will be changed and a service signal is transmitted; and the newly established transmission path should steer clear of the nodes whose addresses need to be changed, so that it may be avoided that failure occurs on the transmission path when the node addresses of the original address chain transmission path are changed; and it may be easy to change the addresses of the nodes which have been steered clear of.

The service signal transmitted on the original address chain transmission path is switched to the above newly established transmission path for transmission.

The address IDs of nodes on the original address chain transmission path are changed.

After the node address IDs are changed and a transmission path formed by the nodes whose addresses are updated is established, the service signal transmitted on the above newly established transmission path is switched back to the updated address chain transmission path for transmission, so that a service signal may be switched from the original address chain transmission path to the updated address chain transmission path during the process for changing a node address in an ASON.

However, it can be seen from the above process for establishing a path based on node address change that when the address IDs of nodes on the original address chain transmission path are changed and a new address chain transmission path is reestablished, it needs to switch the service signal from the original address chain transmission path to the newly established transmission link, and after the node address IDs on the original address chain transmission path are changed, the service signal on the newly established transmission path is switched back to the updated address chain transmission path. As a result, a large degree of damage will certainly be caused on the service signal during the two switching processes.

### Summary of the Invention

The present invention is to provide a method for establishing a path based on node address change, so that a service signal may be switched from an original address chain transmission path to a new address chain transmission path smoothly and rapidly during a node address change process. As a result, damages to the service signal during the switching process may be avoided.

To solve the above problem, the present invention provides the following technical solutions.

A method for establishing a path based on node address change, which is used for changing a node address and establishing a new address chain transmission path, including:

a: changing the current activation address of a node;

b: configuring a new address chain transmission path with the same cross-link resource as an original address chain transmission path passing the node;

c: attaching a first tag for indicating that the new address chain transmission path is a changed address transmission path and a second tag for indicating the original address chain transmission path to be replaced by the new address chain transmission path on the new address chain transmission path;

d: identifying, by a node which the new address chain transmission path passes, a cross-link corresponding to the original address chain transmission path according to the second tag attached on the address chain transmission path when the node determines that the first tag is attached on the new address chain transmission path passing the node, and mapping the cross-link to the new address chain transmission path so as to complete the establishment of the new address chain transmission path.

Wherein:

a label is attached to the changed address so as to indicate that the address is current activation address.

The original address chain transmission path passing the node with a changed address is found by querying a transmission path database stored on the node whose address is changed.

The new address chain transmission path is configured via a network management command by a command line mode.

The new address chain transmission path passes the same nodes and physical transmission line as those of the original address chain transmission path that passes the node whose address is changed.

The step c is implemented as follows:

c1: adding an object to a Resource Reservation Protocol message for carrying the first tag and the second tag; and

c2: transmitting the Resource Reservation Protocol message that carries the first tag and the second tag on the new address chain transmission path which is configured temporarily, so as to attach a first tag and a second tag to the new address chain transmission path.

In the step d, When the node which the new address chain transmission path passes determines that an address chain transmission path passing the node does not attach the first tag, the node establishes a new cross-link for the address chain transmission path, so as to complete the establishment of the address chain transmission path.

After the step d, the method further includes the step of deleting the original address chain transmission path.

In the method, during the process of deleting the original address chain transmission path, if the cross-link and the new address chain transmission link have a mapping relationship in the node which the original address chain transmission path passes, the cross-link in the mapping relationship of the node is reserved.

After the original address chain transmission path is deleted, the method further includes the step of deleting the original activation address of the node whose address is changed.

The method further includes the following step after the step d: performing state refresh and maintenance on the established new address chain transmission path.

An embodiment of the present invention provides another method for establishing a path based on node address change, which is used for changing a node address and establishing a new address chain transmission path, including:

a: changing the current activation address of a node;

b: configuring a new address chain transmission path with the same cross-link resource as the original address chain transmission path passing the node;

c: attaching a tag for indicating the original address chain transmission path to be replaced by the new address chain transmission path on the new address chain transmission path; and

d: finding, by a node which the new address chain transmission path passes, a cross-link corresponding to the original address chain transmission path according to a tag when the node determines that an address chain transmission path passing the node attaches the tag, and mapping the cross-link to the new address chain transmission path, so as to complete the establishment of the new address chain transmission path.

In the step d, when the node which the new address chain transmission path passes determines that an address chain transmission path passing the node does not attach the tag, the node establishes a new cross-link for the address chain transmission path, so as to complete the establishment of the address chain transmission path.

In the present invention, after a node changes current activation address, a new address chain transmission path with totally the same nodes, physical transmission line and cross-link resources as the original address chain transmission path passing the node with a changed address is configured temporarily, and a first tag for indicating that the new address chain transmission path is the changed address transmission path and a second tag for indicating the original address chain transmission path to be replaced by the new address chain transmission path are attached to the configured new address chain transmission path. Thus, when each node which the new address chain transmission path passes determines that the first tag is attached to an address chain transmission path passing it, the node finds a cross-link corresponding to the original address chain transmission path according to a second tag attached to the address chain transmission path, and establishes a mapping relationship between the cross-link and the new address chain transmission path, therefore, the new address chain transmission path is established formally. As a result, when the current activation address needs to be changed during the integration or partition process performed in the control domain by a node in ASON, a new address chain transmission path may be established rapidly for replacing the original address chain transmission path; and during the process of changing a node address and establishing a new address chain transmission path, the service signal transmitted on the original address chain transmission path does not need to be switched to other newly established transmission paths for transmission; instead, since the new address chain transmission path is established rapidly and smoothly, a service signal being transmitted on the original address chain transmission path may be directly switched to the new address chain transmission path for transmission, and since the new address chain transmission path has totally the same nodes, physical transmission line and cross-link resources as those of the original address chain transmission path and only the logic transmission path is changed due to the change of the node address ID, loss of service signals during the switching process of the original address chain transmission path to a new address chain transmission path for transmission may be avoided.

### Brief Description of the Drawings

Figure 1 is a schematic diagram showing a process for switching a service signal from an original address chain transmission path to an updated address chain transmission path in the prior art;

Figure 2 is a flow chart of the main process for implementing the invention;

Figure 3 is a schematic diagram showing the process of temporarily configuring a new address chain transmission path for the original address chain transmission path according to an embodiment of the invention; and

Figure 4 is a schematic diagram showing the process of formally establishing a new address chain transmission path for the original address chain transmission path according to an embodiment of the invention.

### Detailed Description of the Embodiments

Embodiments of the invention will now be illustrated in conjunction with the drawings.

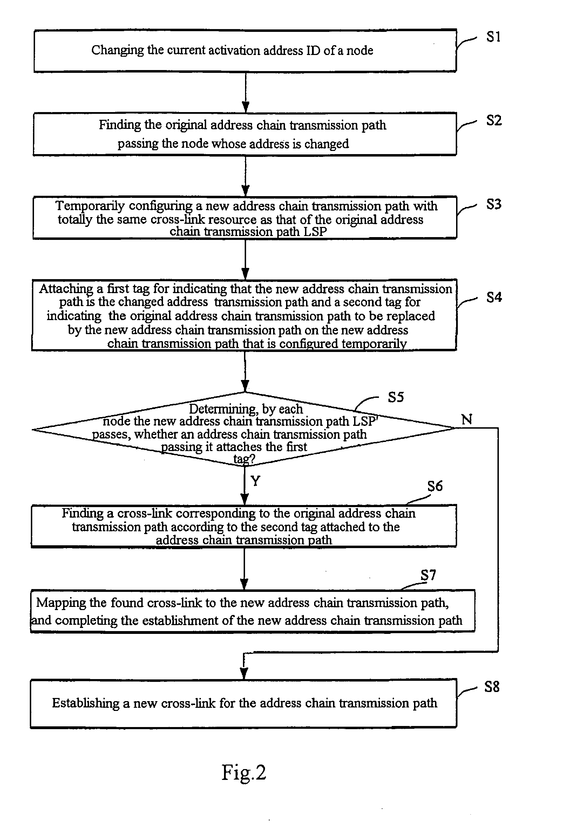

As shown in Figure 2, it is a flow chart of the main process for implementing the invention. It can be seen from Figure 2 that the main process for implementing the invention is as follows.

Step S1: Changing the current activation address ID of a node in an ASON. Wherein a current address ID of the node is set as an activation address ID in the following way:

First of all, changing the address of a node whose address is to be changed.

Then, attaching a label to the changed address to indicate that the address is the current activation address, so that the address ID changed by the node is set as the current activation address ID by identifying the label attached to the address.

Step S2: For the node with a changed address in step S1, finding the original address chain transmission path (represented by LSP) passing the node whose address is changed. Wherein the original address chain transmission path LSP passing the node with a changed address may be found by querying a transmission path database stored on the node whose address is changed.

Step S3: Temporarily configuring (or configuring) a new address chain transmission path (represented by LSP') with totally the same nodes, physical transmission line and cross-link resources as those of the original address chain transmission path LSP according to the original address chain transmission path LSP passing the node with a changed address in Step S2. Here, the original address chain transmission path LSP and the new address chain transmission path LSP' may be referred to as a pair of mutually conjugated transmission paths. The pair of conjugated transmission paths have the same nodes, physical transmission line and inter-node cross-link resources on the physical layer, but two logically independent address chain transmission paths are formed on the logical layer since the nodes employ different current activation address IDs.

Wherein, in the above process, the new address chain transmission path LSP' may be configured temporarily via a network management command by a command line mode.

Step S4: Attaching a first tag (Tag1) for indicating that the new address chain transmission path LSP' is the changed address transmission path and a second tag (Tag2) for indicating the original address chain transmission path LSP to be replaced by the new address chain transmission path LSP' on the new address chain transmission path LSP' temporarily configured in Step S3 respectively.

Wherein, in the above process, an object may be added to a standard RSVP (Resource Reservation Protocol) message for carrying the above Tag1 and Tag2 respectively. After the object for carrying Tag1 and Tag2 is added to the RSVP message, the message format may be as follows:

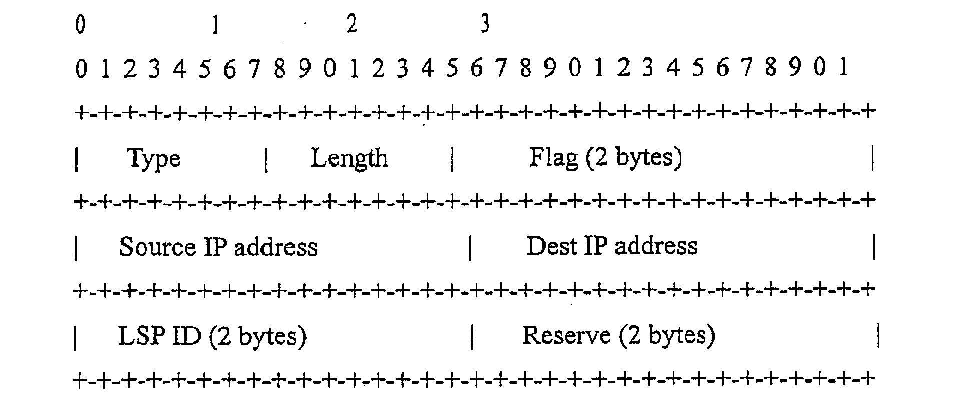

Wherein, domain Type is used for carrying an object for distinguishing the address type of IPV4 or IPV6; domain Flag is used for carrying Tag1, while the subsequent four field domains Source IP address, Dest IP address, LSP ID and Reserve are used for carrying Tag2.

Then, an RSVP message carrying Tag1 for indicating that the new address chain transmission path LSP' is the changed address transmission path and Tag2 for indicating the original address chain transmission path LSP to be replaced by the new address chain transmission path LSP' is transmitted on the new address chain transmission path LSP' which is configured temporarily, so that Tag1 and Tag2 may be attached to the new address chain transmission path.

Step S5: Determining, by each node which the new address chain transmission path LSP' passes, whether an address chain transmission path passing the node attaches Tag1 for identifying that the new address chain transmission path LSP' is the changed address transmission path. If yes, turn to Step S6; otherwise, turn to Step S8.

Step S6: Identifying that the address chain transmission path passing the node is the above changed address transmission path, i.e., the new address chain transmission path LSP' configured temporarily. Hence, the node finds a cross-link corresponding to the original address chain transmission path LSP according to Tag2 for indicating the original address chain transmission path LSP to be replaced by the new address chain transmission path LSP' that is attached to the address chain transmission path passing the node.

Step S7: Mapping the cross-link found in Step S6 to the new address chain transmission path LSP' configured temporarily. When each node which the new address chain transmission path LSP' passes completes the above operation, the new address chain transmission path LSP' configured temporarily is established formally. Subsequently, operations such as state refreshing, configuring and maintenance, etc., may be directly performed on the new address chain transmission path LSP'.

Step S8: Identifying that the address chain transmission path passing the node is a new transmission path to be established. Thus, the node may directly establish a corresponding new cross-link for the address chain transmission path passing the node, so that the address chain transmission path is established.

The new address chain transmission path may also attach only one tag on the new address chain transmission path for indicating the original address chain transmission path to be replaced. As a result, when a node which the new address chain transmission path passes determines that an address chain transmission path passing the node attaches the tag, the node may find a cross-link corresponding to the original address chain transmission path according to the tag and map the cross-link and the new address chain transmission path, so as to complete the establishment of the new address chain transmission path. Similarly, when a node which the new address chain transmission path passes determines that the tag is not attached in an address chain transmission path passing the node, the node may establish a new cross-link for the address chain transmission path passing the node, so as to complete the establishment of the address chain transmission path.

After the new address chain transmission path LSP' is newly established successfully, it is also required to delete the original address chain transmission path LSP one by one from the initial node of the original address chain transmission path LSP. During the process of deleting the LSP, if a mapping relationship between the cross-link and the new address chain transmission link LSP' established in the above process is stored on a node which the original address chain transmission path LSP passes and the mapping relationship matches the new address chain transmission path LSP', then the cross-link in the mapping relationship in the node will be reserved, rather than being deleted.

After the original address chain transmission path LSP is deleted, the original activation address (i.e., the currently non-activation address) also needs to be deleted according to the requirements of the user and the requirements of the integration and partition of the ASON.

The method for establishing a path based on node address change according to an embodiment of the invention will be illustrated in detail.

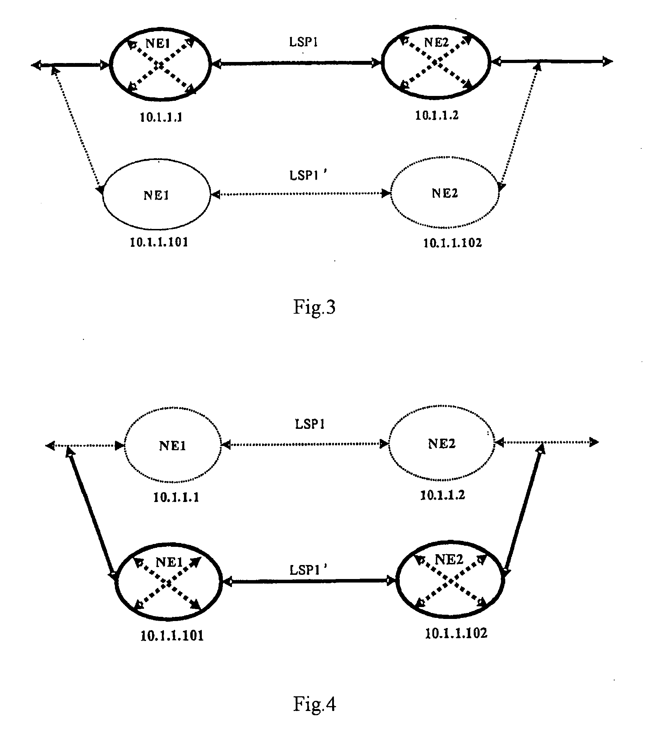

Figure 3 is a schematic diagram showing the process of temporarily configuring a new address chain transmission path for the original address chain transmission path according to an embodiment of the invention. It is hypothesized that the original activation addresses of nodes NE1 and NE2 in ASON are 10.1.1.1 and 10.1.1.2 respectively, the current activation address 10.1.1.1 of node NE1 and the current activation address 10.1.1.2 of node NE2 form the original address chain transmission path LSP1 (represented by the transmission path shown as the solid line in Figure 3), wherein the cross signs of dashed line in node NE1 and NE2 represent the cross-links in the corresponding nodes respectively, and on the original address chain transmission path LSP1, the cross-links in node NE1 and NE2 correspond to the LSP1 respectively.

After the current activation address 10.1.1.1 of node NE1 is changed to 10.1.1.101 and the current activation address 10.1.1.2 of node NE2 is changed to 0.1.1.102, a new address chain transmission path LSP1' is configured temporarily corresponding to the original address chain transmission path LSP, wherein the new address chain transmission path LSP1' and the original address chain transmission path LSP1 are mutually conjugated transmission path, and the new address chain transmission path LSP1' passes the same nodes, such as NE1, NE2, the same physical transmission line and the same cross-link resources as the original address chain transmission path LSP (wherein the new address chain transmission path LSP1' configured temporarily is presented by the dashed line in Figure 3).

Two tags are attached to the above new address chain transmission path LSP1' configured temporarily, one is Tag1 for indicating that LSP1' is the changed address transmission path, and the other is Tag2 for indicating the original address chain transmission path LSP1 to be replaced by LSP1', wherein the two tags may be attached to LSP1' by transmitting an RSVP message carrying Tag1 and Tag2. Thus, when the new address chain transmission path LSP1' passes node NE1 and node NE1 identifies that Tag1 is attached to LSP1', a cross-link corresponding to the original address chain transmission path LSP1 (i.e., the cross-link in node NE1 shown in Figure 3) will be found according to Tag2 attached to LSP1', then the found cross-link and the new address chain transmission path LSP1' are mapped. Node NE2 performs the same process as the node NE1, so that the original cross-link corresponding to LSP1 is mapped to LSP1', and a new address chain transmission path LSP1' is established formally. Figure 4 is a schematic diagram showing the process of formally establishing a new address chain transmission path for the original address chain transmission path according to an embodiment of the present invention. In Figure 4, the new address chain transmission path LSP1' established formally is the transmission path represented by the solid line. It can be seen from Figure 4 that on the new address chain transmission path LSP1' represented by the solid line, the cross-links in node NE1 and node NE2 have been switched from being corresponding to the original address chain transmission path LSP1 to being corresponding to the new address chain transmission path LSP1', so that a new address chain transmission path LSP1' is fully established. Subsequently, various operations, such as state refreshing, configuring and maintenance, etc., may be performed directly on the new address chain transmission path LSP1'.

Finally, the original address chain transmission path LSP1 is deleted one by one from node NE1. During the process of deleting LSP1, it may be detected that a corresponding relationship between the cross-link and LSP1' exists on node NE1, so the cross-link in node NE1 will not be deleted. In the same way, the cross-link in node NE2 will not be deleted either. After the original address chain transmission path LSP1 is deleted, the original activation address in node NE1 and NE2 (i.e., the currently non-activation address) will be deleted according to the requirements of the user.

In conclusion, it can be seen that the method for establishing a path based on node address change according to the present invention may be implemented during the process of control domain integration or partition performed by an ASON, so that when the current activation address of a node is changed, an updated address chain transmission path may be newly established in the case that the service signal transmitted on the original address chain transmission path is not switched to other transmission paths. As a result, the process of newly establishing a new address chain transmission path caused by node address change may be rapid and smooth; and correspondingly, damages to a service signal, which are caused by switching the service signal transmitted on the original address chain transmission path to other transmission paths during the process of establishing a new address chain transmission path, may be avoided.

While the preferred embodiments of the present invention have been described as above, it shall be appreciated that the scope of the present invention shall not be limited thereto, and those skilled in the art can make various variations and modifications to the embodiments without departing from the scope of the present invention. Thus, it is intended that all such variations and modifications shall fall within the scope of the present invention as solely defined in the claims thereof.

## Claims

1. A method for establishing a path based on node address change, which is used for changing a node address and establishing a new address chain transmission path, comprising:
a: changing a current activation address of a node;
b: configuring a new address chain transmission path with the same cross-link resource as an original address chain transmission path passing the node;
c: attaching a first tag for indicating that the new address chain transmission path is a changed address transmission path and a second tag for indicating the original address chain transmission path to be replaced by the new address chain transmission path on the new address chain transmission path;
d: identifying, by a node which the new address chain transmission path passes, a cross-link corresponding to the original address chain transmission path according to the second tag attached on the new address chain transmission path when the node determines the first tag is attached on the new address chain transmission path passing the node, and mapping the cross-link to the new address chain transmission pathso as to complete the establishment of the new address chain transmission path.

2. The method for establishing a path based on node address change according to claim 1, wherein the method further comprises:
attaching a label to the changed address so as to indicate that the address is current activation address.

3. The method for establishing a path based on node address change according to claim 1,further comprising finding the original address chain transmission path passing the node with the changed address by querying a transmission path database stored on the node whose address is changed.

4. The method for establishing a path based on node address change according to claim 1, further comprising configuring the new address chain transmission path via a network management command by a command line mode.

5. The method for establishing a path based on node address change according to claim 1, wherein the new address chain transmission path and the original address chain transmission path pass the same nodes and physical transmission line.

6. The method for establishing a path based on node address change according to claim 1, comprises:
c1: adding an object to a Resource Reservation Protocol message for carrying the first tag and the second tag; and
c2: transmitting the Resource Reservation Protocol message that carries the first tag and the second tag on the new address chain transmission path which is configured temporarily, so as to attach the first tag and the second tag to the new address chain transmission path.

7. The method for establishing a path based on node address change according to claim 1, 2, 3, 4, 5 or 6, wherein, in the step d, when the node which the new address chain transmission path passes determines that the first tag is not attached to the new address chain transmission path passing the node, the node establishes a new cross-link for the address chain transmission path, so as to complete the establishment of the address chain transmission path.

8. The method for establishing a path based on node address change according to claim 1, wherein the method further comprises: deleting the original address chain transmission path after the step d.

9. The method for establishing a path based on node address change according to claim 8, wherein during the process of deleting the original address chain transmission path, if the cross-link and the new address chain transmission link have a mapping relationship in the node which the original address chain transmission path passes, the cross-link in the mapping relationship of the node is reserved.

10. The method for switching service based on node address change according to claim 8 or 9, wherein the method further comprises: deleting the original activation address of the node with the changed address after the original address chain transmission path is deleted.

11. The method for establishing a path based on node address change according to claim 1, wherein, the method further comprises the following step after the step d: performing state refresh or maintenance on the established new address chain transmission path.

12. A method for establishing a path based on node address change, which is used for changing a node address and establishing a new address chain transmission path, comprising:
a: changing a current activation address of a node;
b: configuring a new address chain transmission path with the same cross-link resource as the original address chain transmission path passing the node;
c: attaching a tag for indicating an original address chain transmission path to be replaced by the new address chain transmission path on the new address chain transmission path; and
d: identifying, by a node which the new address chain transmission path passes, a cross-link corresponding to the original address chain transmission path according to the tag when the node determines that an address chain transmission path passing the node attaches the tag, and mapping the cross-link to the new address chain transmission path, so as to complete the establishment of the new address chain transmission path.

13. The method for establishing a path based on node address change according to claim 12, wherein in the step d, when the node which the new address chain transmission path passes determines that an address chain transmission path passing the node does not attach the tag, the node establishes a new cross-link for the address chain transmission path, so as to complete the establishment of the address chain transmission path.
